(19) Europäisches Patentamt
European Patent Office
Office européen des brevets

(11) **EP 2 175 330 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: **09172163.9**

(22) Anmeldetag: **05.10.2009**

(51) Int Cl.:
*G05B 13/04* (2006.01)    *G05B 9/02* (2006.01)
*E05F 15/00* (2006.01)    *H02H 7/085* (2006.01)

(54) **Verfahren und Vorrichtung zum Betreiben einer Einklemmschutzfunktion bei einem elektrischen Schließsystem**

Method and device for operating crush guard function in an electric sealing machine

Procédé et dispositif de fonctionnement d'une fonction de protection contre le coincement dans un système de fermeture électrique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.10.2008 DE 102008042762**

(43) Veröffentlichungstag der Anmeldung:
**14.04.2010 Patentblatt 2010/15**

(73) Patentinhaber: **Robert Bosch GmbH**
**70442 Stuttgart (DE)**

(72) Erfinder:
• **Guarnizo, Pablo Luis**
**70563 Stuttgart (DE)**
• **Stoychev, Stefan**
**30419 Hannover (DE)**

(56) Entgegenhaltungen:
**EP-A- 0 692 856        WO-A-00/42687**
**DE-U1-202005 019 187    DE-U1-202006 002 525**

**Beschreibung**

Technisches Gebiet

Die Erfindung betrifft automatische Schließvorrichtungen, wie beispielsweise automatische Fensterheber und Dachschließanlagen in einem Kraftfahrzeug, die zur Erfüllung gesetzlicher Anforderungen mit einer Einklemmschutzfunktion ausgestattet sind.

Stand der Technik

Zusehends werden in Kraftfahrzeugen Komfortfunktionen realisiert, die mithilfe von Elektromotoren realisiert sind. Diese Komfortfunktionen können beispielsweise elektrische Schließsysteme, wie z.B. elektrische Fensterheber, Schiebedächer oder dergleichen sein. Insbesondere bei durch Elektromotoren beweglichen Bauteilen kann von der Bewegung des Bauteils eine potenzielle Gefährdung für einen Benutzer des Fahrzeugs ausgehen. Zur Reduzierung dieser Gefährdung werden üblicherweise Sicherheitsfunktionen realisiert, die eine sichere Arbeitsweise dieser Komfortfunktionen gewährleistet.

Eine derartige Sicherheitsfunktion ist die Einklemmschutzfunktion bei elektrischen Fensterhebern und Schiebedächern, die Hindernisse beim Schließen selbsttätig erkennt und somit vor einer Verletzungsgefahr schützt. Gemäß einer gesetzlichen Vorschrift muss das Fenster bei einem elektrischen Fensterheber in einem Fahrzeug sofort durch Reversierung der Drehrichtung des Elektromotors geöffnet werden, um das eingeklemmte Hindernis wieder zu befreien, sobald das Antriebsmoment zum Fensterschließen in Abhängigkeit von der Fensterposition einen bestimmten Grenzwert überschreitet. Der Grenzwert für die maximale Einklemmkraft ist gesetzlich auf 100 N festgelegt.

Ein herkömmliches Fensterhebersystem umfasst einen Gleichstrommotor, der über einen Schließmechanismus mit einer Fensterscheibe verbunden ist, um die Fensterscheibe translatorisch in Führungsschienen zu bewegen. In der Regel sind die Kräfte, die auf die Fensterscheibe ausgeübt werden müssen, um dieses zu bewegen, nicht-linear von seiner Position abhängig. Im Normalbetrieb wird die Fensterscheibe beim Schließen durch eine Antriebskraft mit konstanter Geschwindigkeit nach oben bewegt. Diese Kraft steht in Konkurrenz zu anderen Kräften, die im System auftreten, wie z.B. die Reibungskraft, die Gewichtskraft des Fensters und die Beschleunigungskräfte, die durch den Betrieb des Fahrzeugs z.B. auf unebenen Strecken auf die Fensterscheibe einwirken.

Bei einem Einklemmfall liegt weiterhin eine Einklemmkraft vor, die proportional zur Federsteifigkeit des eingeklemmten Objektes ist, wodurch messbare Änderungen in den Motorvariablen wie Motorstrom und Drehzahl hervorgerufen werden. Anhand der gemessenen Änderungen kann ein Einklemmfall indirekt erkannt werden und der Motor kann gestoppt bzw. reversiert werden, um die Fensterscheibe nach unten zu bewegen.

Im Allgemeinen werden verschiedene Konzepte zur Erkennung des Einklemmfalls verwendet. Ein Verfahren erkennt ein Einklemmen durch die direkte Messung der Einklemmkraft mithilfe von eingebauten Kraftsensoren, z.B. in Fensterrahmen. Diese Lösung bietet eine schnelle und direkte Information über die Einklemmkraft und ermöglicht eine sichere Einklemmfallerkennung. Zur Kraftmessung werden optische oder kapazitive Kraftsensoren verwendet. Dieses Verfahren hat jedoch den Nachteil, dass die Sensoren und die dazugehörige Verkabelung aufwändig und teuer sind. Außerdem erhöhen die größere Anzahl von Sensoren das Ausfallrisiko, wodurch die Zuverlässigkeit des Systems begrenzt ist.

Ein weiteres Verfahren besteht in der Überwachung des Motorstroms, wobei der Motorstrom proportional zum ausgeübten Drehmoment ist und daher auch zu der Einklemmkraft proportional ist. Dieses Verfahren kann mit geringem Aufwand realisiert werden.

Ein weiteres Verfahren basiert auf der Beobachtung der Motordrehzahl und einer Auswertung des Drehzahlverlaufs. Hier kann beispielsweise ein Einklemmfall vorliegen, wenn die Drehzahl des Motors einen bestimmten Schwellwert unterschreitet bzw. wenn ein Gradient eines Drehzahlabfalls einen bestimmten Schwellwert unterschreitet.

Aufgrund der Änderung der Reibungsverluste, wie z.B. in dem Schließmechanismus und bei den Führungsschienen des Fensters bzw. dessen Verlaufs über der Fensterposition während der Gesamtwirkungsdauer und der unvorhersehbaren Beschleunigungskräfte, die auf das Fenster wirken, ist eine Unterscheidung, ob es sich bei einer Antriebsmotorstromerhöhung bzw. Drehzahlverminderung um ein reibungsbedingtes Phänomen oder um einen Einklemmfall handelt, oftmals schwierig. So kann es vorkommen, dass bei unebener Fahrbahn bei Betätigung des Fensterhebers zum Schließen des Fensters fälschlicherweise ein Einklemmfall erkannt wird, obwohl das Fahrzeug lediglich über eine Bodenwelle gefahren ist. Dies kann beispielsweise an einer Position der Fensterscheibe vorkommen, bei dem die Reibung aufgrund grund von Alterung der Führungseinrichtung bzw. des Schließmechanismus ohnehin erhöht ist.

Mit der DE 20 2006 002 525 U1 ist eine elektromotorische Verstellvorrichtung mit einem Eindämmschutz bekannt geworden, bei dem aus erfassten Kenngrößen des Antriebs ein Entscheidungskriterium für den einzelnen Schutz abgeleitet wird. Dabei wird der aktuelle Zustand der Feststellvorrichtung mittels Fuzzy-Logik einer bestimmten Bewegungsklasse zugeordnet.

Die EP-A-0692856 betrifft eine Steuervorrichtung eines elektromotorischen Antriebs mit einer einzelnen Schutzfunktion. Dabei wird ein Parameter, der vom Bieterstand der Bewegung abhängt, gemessen und mit einem vorgegebenen Wunschfenster verglichen.

Die DE 20 2005 019 187 U1 zeigt eine elektromotorische Sitzverstellung, bei der ein die Verstellkraft des Antriebs repräsentierendes Signal aufgenommen wird und unter Verwendung von Fuzzy-Logik eine Filterfunktion überproportional verstärkt werden kann.

Weiterhin soll gemäß beiliegender handschriftlicher Korrekturen ein Abschnitt aus der ursprünglichen Seite 7 auf Seite 4 eingefügt werden (Austauschseiten 4, 4a, 7).

Es ist Aufgabe der vorliegenden Erfindung, ein Verfahren und eine Vorrichtung zum Realisieren einer Einklemmschutzfunktion bei einem Schließmechanismus zur Verfügung zu stellen, bei dem insbesondere Nichtlinearitäten zwischen der benötigten Schließkraft und der Position des sich zum Schließen bewegenden Bauteils ausreichend berücksichtigt werden, um die Erkennung eines Einklemmfalls zuverlässiger durchführen zu können.

Offenbarung der Erfindung

Diese Aufgabe wird durch das Verfahren zum Betreiben einer Einklemmfunktion für einen automatischen Schließmechanismus gemäß Anspruch 1 sowie durch die Vorrichtung gemäß dem nebengeordneten Anspruch gelöst.

Weitere vorteilhafte Ausgestaltungen der Erfindung sind in den abhängigen Ansprüchen angegeben.

Gemäß einem Aspekt ist ein Verfahren zum Erkennen eines Einklemmfalls bei einem mit einem Elektromotor angetriebenen Schließsystem vorgesehen. Das Verfahren umfasst folgende Schritte:

- Bereitstellen mehrerer Motorgrößen, die den Zustand des Elektromotors zu einem bestimmten Zeitpunkt angeben;
- Bestimmen einer Einklemmkraft durch Anwenden von Fuzzy-Regeln in einem Fuzzy-Prozess auf die mehreren Motorgrößen;
- Erkennen des Einklemmfalls abhängig von der Einklemmkraft.

Weiterhin wird die Einklemmkraft durch Anwenden der Fuzzy-Regeln in dem Fuzzy-Prozess abhängig von Gradienten der Motorgrößen bezüglich der Drehzahl des Elektromotors bestimmt.

Eine Idee des obigen Verfahrens besteht darin, die Nichtlinearität zwischen Motorkenngrößen und der Bewegung des Schließteils mithilfe von Fuzzy-Logik nachzubilden. Für die Modellierung mithilfe von Fuzzy-Logik ist es nicht notwendig, dass ein mathematisches oder physikalisches Modell des zu steuernden Systems vorliegt im Unterschied zu der klassischen Systemidentifikation, die die Bestimmung von Struktur und Parametern des mathematischen Modells erfordert. Die Modellierung mit Hilfe von Fuzzy-Logik ermöglicht das Nachbilden des Übertragungsverhaltens nichtlinearer Prozesse und anderer unbekannter funktionalen Abhängigkeiten zwischen vorgegebenen Größen. Aus diesem Grund ist die Verwendung eines Fuzzy-Modells zur Erkennung eines Einklemmfalls bei einem automatischen Schließsystem gut geeignet.

Weiterhin kann der Einklemmfall abhängig von einem Ergebnis eines Schwellwertvergleichs der Einklemmkraft durchgeführt werden.

Gemäß einer Ausführungsform können die Fuzzy-Regeln durch ein Clustering-Verfahren, insbesondere durch ein Subtractive-Clustering-Verfahren, anhand von Trainingsdaten ermittelt werden, wobei die Trainingsdaten die mehreren Motorgrößen einer gemessenen Einklemmkraft zuordnen.

Zum Extrahieren der für das Fuzzy-Modell benötigten Fuzzy-Regeln aus den Trainingsdaten zur Systemmodellierung wird die Cluster-Analyse eingesetzt. Grundsätzlich besteht das Ziel der Cluster-Analyse darin, Gruppierungen von Daten in einem Datensatz hinsichtlich der Ähnlichkeit bestimmter Merkmale zu finden. Prinzipiell wird im einfachsten Fall nach etwa kreisförmigen Punktwolken in Datensätzen gesucht, die durch einen typischen Vertreter nahe oder auf dem gewichteten Schwerpunkt (Cluster-Zentrum) repräsentiert werden. Für die einzelnen Datensätze werden Zugehörigkeitsgrade zu den einzelnen Clustern berechnet. Die Fuzzy-Cluster-Analyse erlaubt unscharfe Übergänge zwischen den einzelnen Clustern, dabei beträgt der Zugehörigkeitsgrad eines Datums im Cluster-Zentrum 1 und wird mit zunehmendem Abstand zum Cluster-Zentrum kleiner. Jedes so ermittelte Cluster entspricht einer Fuzzy-Regel.

Zum weiteren Optimieren der so generierten Fuzzy-Regeln existieren Verfahren, die die Optimierung und das Einlernen des Fuzzy-Systems ermöglichen. Z.B. Takagi-Sugeno-Fuzzy-Systeme, die Optimierung der EingangsZugehörigkeitsfunktionen durch das Gradientenabstiegsverfahren und eine gleichzeitige Optimierung der Gleichungen von dem Folgenteil des Fuzzy-Systems durch das Verfahren der kleinsten Fehlerquadrate.

Weiterhin können Cluster-Radien der Fuzzy-Regeln ausgewählt werden, so dass eine oder mehrere Differenzen der durch die Anwendung der Fuzzy-Regeln bei einem Betriebspunkt ermittelten Einklemmkraft und einer entsprechenden, bei dem Betriebspunkt gemessenen Einklemmkraft minimal ist.

Alternativ oder zusätzlich können Cluster-Radien der Fuzzy-Regeln ausgewählt werden, so dass die Anzahl der sich ergebenden Fuzzy-Regeln einen vorgegebenen Grenzwert nicht übersteigt.

Weiterhin kann die Einklemmkraft anhand von Parametergrößen und der Motorgrößen ermittelt werden, wobei die Parametergrößen ermittelt werden, indem Trainingsdatensätze auf die Fuzzy-Regeln angewendet werden und ein überbestimmtes lineares Gleichungssystem erstellt wird, bei dem für erfüllte Fuzzy-Regeln bei den die entsprechende Fuzzy-Regel erfüllenden Trainingsdatensätzen eine lineare Gleichung mit den Parametergrößen aufgestellt wird, wobei die Parametergrößen für jede Fuzzy-Regel durch Lösen des überbestimmten linearen Gleichungssystems durch ein Verfahren der kleinsten Fehlerquadrate bestimmt werden.

Gemäß einer weiteren Ausführungsform kann das Fuzzy-System mit den Fuzzy-Regeln durch ein ANFIS-Optimierungsverfahren optimiert werden, wobei Parameter, die Eingangszugehörigkeitsfunktionen zum Bestimmen der Cluster definieren, mit Hilfe eines aus dem Stand der Technik bekannten Gradientenabstiegsverfahren optimiert werden und wobei die Parameter zum Bestimmen von Ausgangszugehörigkeitsfunktionen der Fuzzy-Regeln durch ein Verfahren der kleinsten Quadrate optimiert werden.

Gemäß einem weiteren Aspekt ist eine Vorrichtung zum Erkennen eines Einklemmfalls bei einem mit einem Elektromotor angetriebenen Schließsystem vorgesehen. Die Vorrichtung umfasst:

- eine Steuereinheit, die ausgebildet ist, um mehrere Motorgrößen zu empfangen, die den Zustand des Elektromotors zu einem bestimmten Zeitpunkt angeben, um eine Einklemmkraft durch Anwenden von Fuzzy-Regeln in einem Fuzzy-Prozess auf die mehreren Motorgrößen zu bestimmen und um den Einklemmfall abhängig von der Einklemmkraft zu erkennen.

Gemäß einem weiteren Aspekt ist ein elektrisches Schließsystem vorgesehen. Das Schließsystem umfasst:

- einen Elektromotor zum Antreiben eines Schließteils, dessen Bewegung ein Schließen des Schließsystems bewirkt;
- einen Sensor zum Erfassen mehrerer Motorgrößen, die den Zustand des Elektromotors zu einem bestimmten Zeitpunkt angeben;
- die obige Steuereinheit.

Gemäß einem weiteren Aspekt ist ein Computerprogramm vorgesehen, das, wenn es auf einer Datenverarbeitungseinheit ausgeführt wird, das obige Verfahren ausführt.

Kurzbeschreibung der Zeichnungen

Bevorzugte Ausführungsformen der Erfindung werden nachfolgend anhand der beigefügten Zeichnungen näher erläutert. Es zeigen:

Fig. 1 eine schematische Darstellung eines automatischen Fensterhebers in einem Kraftfahrzeug;
Fig. 2 eine schematische Blockdarstellung der Funktion zur Erkennung eines Einklemmfalls, die in der Steuereinheit des automatischen Fensterhebers der Fig. 1 realisiert ist;
Fig. 3 ein Beispiel für Trainingsdaten, mit denen das Fuzzy-Modell eingelernt wird;
Fig. 4 eine Tabelle, die die Ergebnisse der Einklemmkraftmodellierung darstellt.

Beschreibung von Ausführungsformen

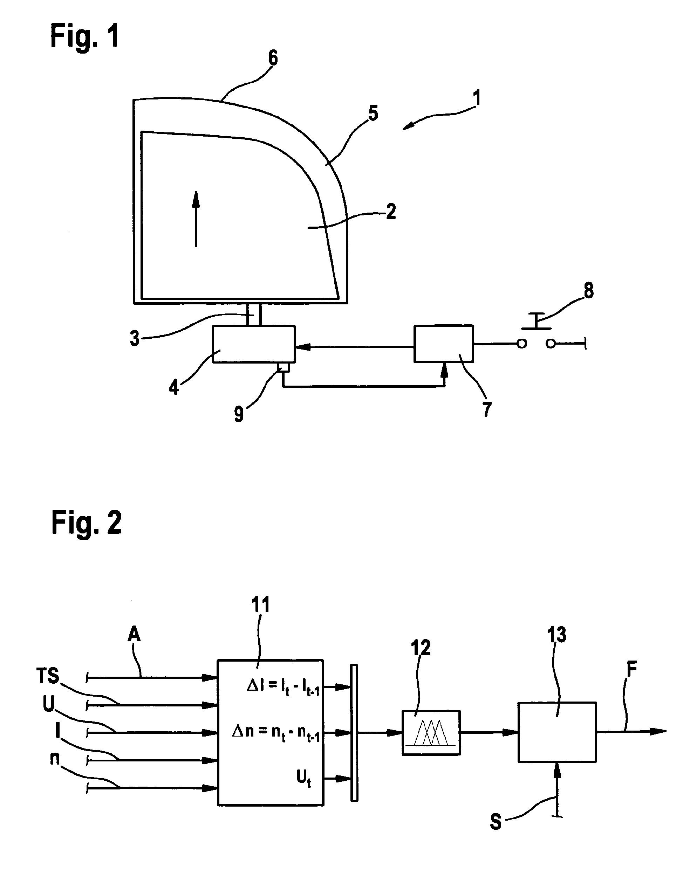

In Fig. 1 ist ein Fensterhebersystem 1 dargestellt, bei dem eine Fensterscheibe 2 mithilfe eines Schließmechanismus 3 und angetrieben durch einen Elektromotor 4 in einem Fensterrahmen 5 beweglich verfahrbar ist. In vorliegenden Ausführungsbeispielen wird die Fensterscheibe 2 nach oben (in Pfeilrichtung) verfahren, um das Fenster zu schließen, wobei die Fensterscheibe 2 an einem oberen Ende 6 des Fensterrahmens 5 anstößt. Der Elektromotor 4 wird von einer Steuereinheit 7 abhängig von einer Betätigung eines Bedienelementes 8 angesteuert, so dass sich die Fensterscheibe 2 in einer vorgegebenen Richtung bewegt. Z.B. wird die Fensterscheibe 2 bei Betätigen des Bedienelementes 8 angesteuert durch die Steuereinheit 7 durch eine Rotation des Elektromotors 4 nach oben bewegt, so dass die Fensterscheibe 2 eine Schließbewegung ausführt.

In der Steuereinheit 7 ist eine Einklemmschutzfunktion realisiert, die anhand von Motorkenngrößen einen Einklemmfall detektiert, bei dem ein Gegenstand oder ein Körperteil zwischen einer Fensterkante der Fensterscheibe 2 und dem Fensterrahmen 5 gerät und auf den durch eine Schließbewegung des Fensters 2 eine Kraft ausgeübt wird. Dazu sind an dem Elektromotor 4 ein oder mehrere Sensoren 9 angebracht, so dass der Motorstrom I und die Motordrehzahl n erfasst werden können. Alternativ kann die Motordrehzahl n in der Steuereinheit 7 auch mit Hilfe bekannter Verfahren aus dem Motorstromverlauf ermittelt werden. Angaben über den Motorstrom I und die Motordrehzahl n werden in der Steuereinheit 7 bereitgestellt.

Zusätzlich kann eine an dem Elektromotor 4 anliegende Motorspannung U ebenfalls detektiert werden. Die Erfassung der Motorspannung U, die an den Elektromotor 4 angelegt ist, ist notwendig, um die daraus resultierenden unterschiedlichen Reaktionszeiten der Einklemmschutzfunktion ableiten zu können, da sich aufgrund unterschiedlicher Motorspannung U an dem Elektromotor 4 unterschiedliche Antriebsmomente ergeben, die zu unterschiedlichen Kräften auf ein eingeklemmtes Objekt führen.

In Fig. 2 ist ein Blockschaltbild zur Realisierung der Einklemmschutzfunktion in der Steuereinheit 7 dargestellt.

Zur Realisierung der Einklemmschutzfunktion in der Steuereinheit 7 ist ein Eingangsblock 11 vorgesehen, dem als Eingangsgrößen die aktuellen Werte über den Motorstrom I, der Motordrehzahl n und der Motorspannung U, die an dem Elektromotor 4 anliegt, bereitgestellt werden.

Ein Triggersignal TS wird bereitgestellt, das einen Triggerimpuls bei bestimmten Positionen des Elektromotors 4 abgibt, z.B. bei jeder Viertel Motorumdrehung.

Weiterhin ist ein Aktivierungseingang vorgesehen, an den ein Aktivierungssignal A anliegt, mit dem die Einklemmschutzfunktion aktiviert wird. Das Aktivierungssignal kann z.B. durch eine verzögerte Aktivierung vorsehen, die Einklemmschutzfunktion erst eine bestimmte Zeit nach dem Anfahren des Elektromotors 4 zu aktivieren, um Fehlauslösungen aufgrund von Antriebsspiel oder dgl. während der Anlaufphase zu vermeiden.

Der Eingangsblock 11 bereitet die Werte zu dem Motorstrom I, der Motordrehzahl n und der Motorspannung U bezüglich des empfangenen Triggersignals TS auf. Dazu ermittelt der Eingangsblock 11 aus den empfangenen Stromwerten I eine Angabe zu dem momentanen Gradienten des Stroms I. Dies kann beispielsweise durch Bilden der Differenz zwischen dem momentanen Stromwert $I_t$ und dem bei dem letzten Triggerimpuls des Triggersignals TS erfassten Stromwert $I_{t-1}$ durchgeführt werden. D.h. Stromdifferenzen $\Delta I$ zwischen zwei Zeitpunkten t und t-1, zwischen denen sich der Elektromotor 4 um einen bestimmten Lagewinkel weiterbewegt hat, hier eine Viertel Umdrehung des Elektromotors 4, d.h. einem Lagewinkel von 90°, entsprechen der in der nachfolgenden Fuzzy-Regelung verwendeten Angaben des aktuellen Gradienten des Stroms I bezüglich der Drehzahl n. Es können jedoch auch andere Werte für den Lagewinkel zur Generierung der Triggerimpulse vorgesehen werden. Der Bezug auf einen Lagewinkel hat den Vorteil, dass die Frequenz der Auswertung der Eingangsgrößen bei höheren Drehzahlen ansteigt, so dass die Reaktionsgeschwindigkeit der Fuzzy-Regelung bei höheren Drehzahlen erhöht ist.

Analog ermittelt der Eingangsblock 11 aus den empfangenen Drehzahlwerten n eine Angabe zu dem momentanen Gradienten der Drehzahl n. Dies kann beispielsweise durch Bilden der Differenz zwischen der momentanen Drehzahl $n_t$ und der bei dem letzten Triggerimpuls des Triggersignals TS erfassten Drehzahl $n_{t-1}$ durchgeführt werden. D.h. Drehzahldifferenzen $\Delta n$ zwischen zwei Zeitpunkten t und t-1, zwischen denen sich der Elektromotor 4 um einen bestimmten Lagewinkel weiterbewegt hat, hier eine Viertel Umdrehung des Elektromotors 4, d.h. einem Lagewinkel von 90°, entsprechen der in der nachfolgenden Fuzzy-Regelung verwendeten Angaben des aktuellen Gradienten der Drehzahl n. Es können jedoch auch für die Bestimmung des Drehzahlgradienten andere Lagewinkel zur Generierung der Triggerimpulse vorgesehen werden.

Die Angaben $\Delta I$, $\Delta n$ über den Drehzahlgradienten, den Stromgradienten und der Spannung U werden als aufbereitete Größen von dem Eingangsblock 11 an einen Fuzzy-Steuerblock 12 ausgegeben. Der Fuzzy-Steuerblock 12 ermittelt anhand von implementierten Fuzzy-Regeln die von der Fensterscheibe 2 ausgeübte Einklemmkraft.

In einem Vergleichsblock 13 wird die so modellierte Einklemmkraft mit einem Schwellwert S verglichen und ein Auslösesignal F vom Ausgang des Vergleichsblocks generiert, wenn ein vorgegebener Schwellwert überschritten ist.

Für die Erstellung der in dem Fuzzy-Steuerblock 12 implementierten Fuzzy-Regeln kann das Subtractive-Clustering-Verfahren eingesetzt. Beim Subtractive-Clustering-Verfahren beruht das Verfahren zum Extrahieren von Fuzzy-Regeln auf Ermitteln von Clustern in den repräsentativen Datensätzen (Trainingsdaten), das beispielsweise in Chiu, S.L., "Extracting Fuzzy Rules from Data for Function Approximation and Pattern Classification", Chapter 9, Fuzzy Information Engineering 1997 beschrieben ist und auf das sich die vorliegende Beschreibung zum Verständnis des Clustering-Verfahrens bezieht. Jedes Cluster entspricht dabei einer Fuzzy-Regel, die einen Bereich im Eingangsraum zu einem Bereich im Ausgangsraum verbindet. Das Subtractive-Clustering-Verfahren kann auch die Kriterien des Mountain-Clusterings zum Akzeptieren bzw. Ablehnen eines Punktes als Cluster-Zentrum verwenden.

Grundsätzlich besteht das Ziel des Clustering-Verfahrens (Cluster-Analyse) darin, Gruppierungen von Daten in einem Trainingsdatensatz hinsichtlich der Ähnlichkeit bestimmter Merkmale zu finden. Prinzipiell wird im einfachsten Fall nach etwa kreisförmigen Punktwolken in Trainingsdatensätzen gesucht, die durch einen typischen Vertreter nahe oder auf dem gewichteten Schwerpunkt (Cluster-Zentrum) repräsentiert werden. Für die einzelnen Datensätze werden Zugehörigkeitsgrade zu den einzelnen Clustern berechnet. Die Fuzzy-Cluster-Analyse erlaubt unscharfe Übergänge zwischen den einzelnen Clustern, dabei beträgt der Zugehörigkeitsgrad eines Datums im Cluster-Zentrum 1 und wird mit zunehmendem Abstand zum Cluster-Zentrum kleiner. Jedes so ermittelte Cluster entspricht einer Fuzzy-Regel.

Um Regeln für einen Fuzzy-Steuerblock 12 mit diesem Verfahren zu erstellen, die die jeweilige Einklemmkraft aus den beschriebenen Eingangsgrößen modelliert, werden Trainingsdaten aufgenommen, die den Zusammenhang zwischen den ausgewählten Eingängen und dem Ausgang darstellen. Im vorliegenden Fall werden dazu die Angabe $\Delta I$ über den Motorstromgradienten , die Angabe über den Motordrehzahlgradienten $\Delta n$ und die Motorspannung U des Elektromotors 4 erfasst und die daraus resultierende Einklemmkraft ermittelt. Die Trainingsdaten wurden bei verschiedenen Versorgungsspannungen des Elektromotors zwischen 10 und 16 V, bei verschiedenen Federsteifigkeiten des Einklemmobjektes zwischen 5 und 65 N/mm, bei verschiedenen Umgebungstemperaturen zwischen -30° bis 80°C und bei verschiedenen Fahrten des Fahrzeugs, z.B. bei einer Fahrt auf ebener Fahrbahn und auf einer Rüttelstrecke aufgezeichnet.

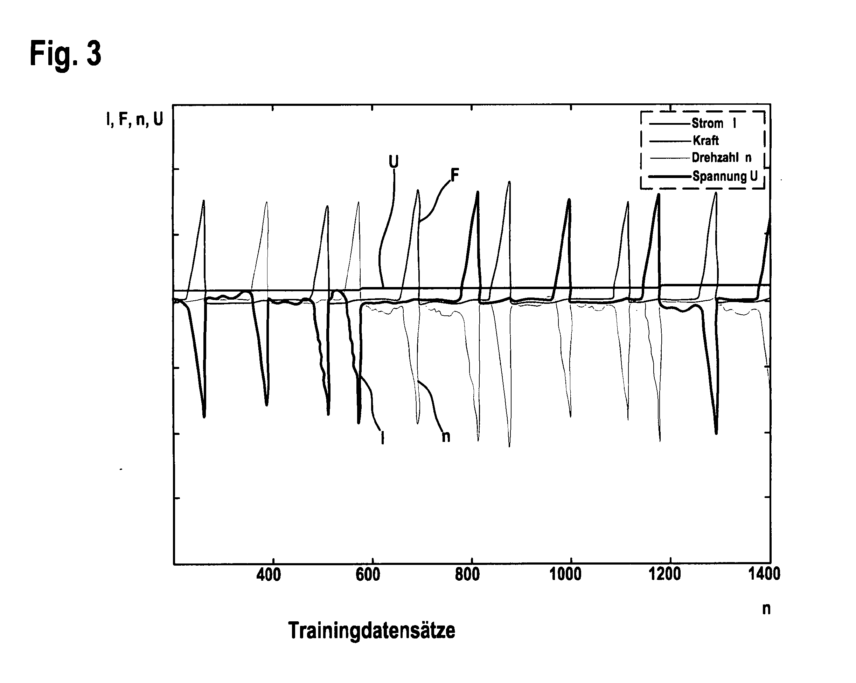

Die Trainingsdaten sollten alle repräsentativen Eigenschaften vom System beinhalten, d.h. alle möglichen Arbeitspunkte sollten betrachtet werden. Fig. 3 zeigt beispielhaft eine grafische Darstellung für derartige Trainingsdaten.

Nach Erstellen der Trainingsdaten wird das Subtractive-Clustering-Verfahren angewendet, um Cluster-Zentren zu ermitteln. Mehrere Fuzzy-Systeme wurden mit unterschiedlicher Parametereinstellung bei der Generierung (z.B. unterschiedliche Cluster-Radien) verwendet.

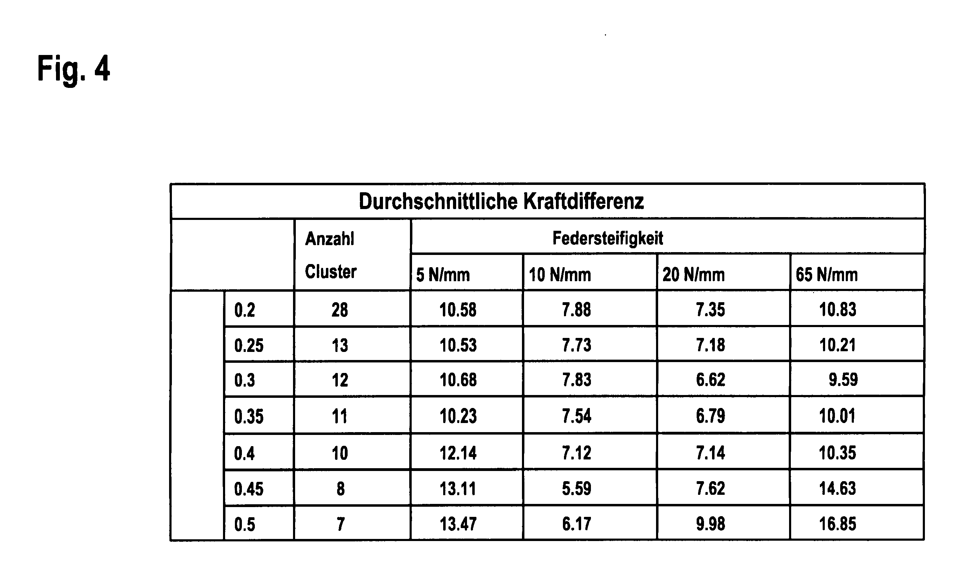

In der Tabelle der Fig. 4 gibt die erste Spalte die Radiengröße an und die zweite Spalte die Anzahl der Cluster, die sich bei der entsprechenden Radiengröße durch das Subtractive-Clustering-Verfahren ergeben. Die Werte der gemessenen und geschätzten Einklemmkräfte bei Erreichen des Schwellenwerts wurden gespeichert und daraus die Differenz zwischen den beiden Werten als Absolutwert gebildet. Diese Differenz dient als Hauptkriterium bei der Bewertung der Fuzzy-Systeme. Da es sich bei den Simulationen um mehrere Einklemmfälle mit unterschiedlichen Spannungen und Federkonstanten handelte, wurde für jedes Fuzzy-System der Mittelwert aus den ermittelten Kraftdifferenzen pro Federkonstante gebildet. Die Ergebnisse aus den Simulationen sind in der Tabelle der Fig. 4 gezeigt.

Man erkennt aus der Tabelle der Fig. 4, dass die ermittelten Werte bei den unterschiedlichen Systemen sehr nahe beieinander liegen, obwohl die Anzahl der Cluster und damit auch der Fuzzy-Regeln stark unterschiedlich sind. Die geringsten Differenzen zwischen der wirklichen und der modellierten Einklemmkraft wurde bei den Systemen mit einem Cluster-Radius von 0,3 und 0,35 ermittelt. Der zugrundeliegende Clusterradius wird also vorzugsweise bei einer Abwägung der kleinsten Differenzen zwischen der wirklichen und der modellierten Einklemmkraft und der geringsten Anzahl der für das Modell zu erstellenden Fuzzy-Regeln ausgewählt. Jedes Cluster stellt eine Fuzzy-Regel dar, die sich wie folgt ausdrücken lässt:

Regel i:

Wenn Motorstrom I im Cluster i und Motordrehzahl n in Cluster ii und Betriebsspannung in Cluster iii

$$\text{dann Einklemmkraft} = A_i \cdot \text{Motorstrom I} + B_i \cdot \text{Motordrehzahl n} +$$

$$C_i \ \text{Betriebsspannung U} + D_i$$

Für die Ermittlung der Parameter der Ausgangsfunktionen $A_i$, $B_i$, $C_i$, $D_i$ wird dann das Verfahren der kleinsten Fehlerquadrate verwendet, d.h. bei gegebenen Eingangszugehörigkeitsfunktionen, ermittelt durch das oben beschriebene Fuzzy-Clustering und einer genügend großen Anzahl von Trainingsdaten kann für die Parameter der Funktionen in den Konklusionen ein überbestimmtes Gleichungssystem aufgestellt werden. Die Parameter des so aufgestellten linearen Gleichungssystems lassen sich nach Übertragung aller Trainingsdatenpaare mit einem Verfahren der kleinsten Fehlerquadrate bestimmen. Ermittelt werden die obigen Parameter $A_i$, $B_i$, $C_i$, $D_i$, so dass sie den Ausgang aus den vorgegebenen Trainingsdaten in möglichst genauer Weise wiedergeben.

Für die Optimierung des gesamten Fuzzy-Systems kann das ANFIS-Optimierungsverfahren, das aus der Druckschrift Jang, J.-S. R. "Adaptive Network-based Fuzzy Inference System", Transactions on Systems, Man and Cybernetics, Vol. 23, No. 3, Mai/Juni 1993, offenbart ist, verwendet werden. Das Verfahren kombiniert die Optimierung der Parameter der EingangsZugehörigkeitsfunktionen mit einem in dem Stand der Technik an sich bekannten Gradientenabstiegsverfahren und der Ausgangs-Zugehörigkeitsfunktion mit dem Verfahren der kleinsten Fehlerquadrate. Dadurch können die Fuzzy-Regeln eines Takagi-Sugeno-Fuzzy-Systems optimiert werden. Dies ist besonders hilfreich, wenn bei der Erstellung der Regeln kein Experte seine Kenntnisse über das Systemverhalten durch die Regeln implementiert hat.

**Patentansprüche**

1.  Verfahren zum Erkennen eines Einklemmfalls bei einem mit einem Elektromotor (4) angetriebenen Schließsystem (1), mit folgenden Schritten:

    - Bereitstellen mehrerer Motorgrößen (U, I, n), die den Zustand des Elektromotors (4) zu einem bestimmten Zeitpunkt angeben;
    - Bestimmen einer Einklemmkraft durch Anwenden von Fuzzy-Regeln in einem Fuzzy-Prozess unter Verwendung der mehreren Motorgrößen (U, I, n);
- Erkennen des Einklemmfalls abhängig von der Einklemmkraft,

**dadurch gekennzeichnet, dass** die Einklemmkraft durch Anwenden der Fuzzy-Regeln in dem Fuzzy-Prozess abhängig von Gradienten der Motorgrößen ($\Delta$I, $\Delta$n) bestimmt wird.

2. Verfahren nach Anspruch 1, wobei der Einklemmfall abhängig von einem Ergebnis eines Schwellwertvergleichs der Einklemmkraft durchgeführt wird.

3. Verfahren nach einem der Ansprüche 1 bis 2, wobei die Fuzzy-Regeln durch ein Clustering-Verfahren, insbesondere durch ein Subtractive-Clustering-Verfahren, anhand von Trainingsdaten ermittelt werden, wobei die Trainingsdaten die mehreren Motorgrößen einer gemessenen Einklemmkraft zuordnen.

4. Verfahren nach Anspruch 3, wobei Cluster-Radien der Fuzzy-Regeln ausgewählt werden, so dass eine oder mehrere Differenzen der durch die Anwendung der Fuzzy-Regeln bei einem Betriebspunkt ermittelten Einklemmkraft und einer entsprechenden, bei dem Betriebspunkt gemessenen Einklemmkraft minimal ist.

5. Verfahren nach Anspruch 3, wobei Cluster-Radien der Fuzzy-Regeln ausgewählt werden, so dass die Anzahl der sich ergebenden Fuzzy-Regeln einen vorgegebenen Grenzwert nicht übersteigt.

6. Verfahren nach einem der Ansprüche 1 bis 5, wobei die Einklemmkraft anhand von Parametergrößen und der Motorgrößen (U, I, n) ermittelt wird, wobei die Parametergrößen ermittelt werden, indem Trainingsdatensätze auf die Fuzzy-Regeln angewendet werden und ein überbestimmtes lineares Gleichungssystem erstellt wird, bei dem für erfüllte Fuzzy-Regeln bei den die entsprechende Fuzzy-Regel erfüllenden Trainingsdatensätzen eine lineare Gleichung mit den Parametergrößen aufgestellt wird, wobei die Parametergrößen für jede Fuzzy-Regel durch Lösen des überbestimmten linearen Gleichungssystems mit Hilfe eines Verfahrens der kleinsten Fehlerquadrate bestimmt werden.

7. Verfahren nach Anspruch 3, wobei das Fuzzy-System mit den Fuzzy-Regeln durch ein ANFIS-Optimierungsverfahren optimiert wird, wobei Parameter, die Eingangszugehörigkeitsfunktionen zum Bestimmen der Cluster definieren, mit Hilfe eines Gradientenabstiegsverfahren optimiert werden und wobei die Parameter zum Bestimmen von Ausgangszugehörigkeitsfunktionen der Fuzzy-Regeln durch ein Verfahren der kleinsten Quadrate optimiert werden.

8. Vorrichtung zum Erkennen eines Einklemmfalls bei einem mit einem Elektromotor (4) angetriebenen Schließsystem (1), umfassend:

- eine Steuereinheit (7), die ausgebildet ist, um mehrere Motorgrößen (U, I, n) zu empfangen, die den Zustand des Elektromotors (4) zu einem bestimmten Zeitpunkt angeben, um eine Einklemmkraft durch Anwenden von Fuzzy-Regeln in einem Fuzzy-Prozess auf die mehreren Motorgrößen (U, I, n) zu bestimmen und um den Einklemmfall abhängig von der Einklemmkraft zu erkennen, wobei die Einklemmkraft durch Anwenden der Fuzzy-Regeln in dem Fuzzy-Prozess abhängig von Gradienten der Motorgrößen ($\Delta$I, $\Delta$n) bestimmt wird.

9. Elektrisches Schließsystem (1), umfassend:

- einen Elektromotor (4) zum Antreiben eines Schließteils (2), dessen Bewegung ein Schließen des Schließsystems (1) bewirkt;
- einen Sensor (9) zum Erfassen mehrerer Motorgrößen (U, I, n), die den Zustand des Elektromotors (4) zu einem bestimmten Zeitpunkt angeben;
- eine Vorrichtung nach Anspruch 8.

10. Computerprogramm, das, wenn es auf einer Datenverarbeitungseinheit ausgeführt wird, ein Verfahren gemäß einem der Ansprüche 1 bis 7 ausführt.

**Claims**

1. Method for identifying a trapping instance in a closing system (1) which is driven by an electric motor (4), comprising the following steps:

- providing a plurality of motor variables (U, I, n) which indicate the state of the electric motor (4) at a specific time;
- determining a trapping force by applying fuzzy rules in a fuzzy process using the plurality of motor variables (U, I, n);
- identifying the trapping instance as a function of the trapping force,

**characterized in that** the trapping force is determined by applying the fuzzy rules in the fuzzy process as a function of gradients of the motor variables ($\Delta I$, $\Delta n$).

2. Method according to Claim 1, wherein the trapping instance is carried out as a function of a result of a threshold value comparison of the trapping force.

3. Method according to either of Claims 1 and 2, wherein the fuzzy rules are ascertained by a clustering method, in particular by a subtractive clustering method, on the basis of training data, wherein the training data assigns the plurality of motor variables to a measured trapping force.

4. Method according to Claim 3, wherein cluster radii of the fuzzy rules are selected such that one or more differences in the trapping force which is ascertained by the application of the fuzzy rules at an operating point and a corresponding trapping force which is measured at the operating point is/are minimal.

5. Method according to Claim 3, wherein cluster radii of the fuzzy rules are selected such that the number of resulting fuzzy rules does not exceed a prespecified limit value.

6. Method according to one of Claims 1 to 5, wherein the trapping force is ascertained on the basis of parameter variables and the motor variables (U, I, n), wherein the parameter variables are ascertained by training data sets being applied to the fuzzy rules and an overdetermined linear equation system being created, in which a linear equation containing the parameter variables is established for satisfied fuzzy rules in the training data sets which satisfy the corresponding fuzzy rules, wherein the parameter variables for each fuzzy rule are determined by solving the overdetermined linear equation system with the aid of a method of least square errors.

7. Method according to Claim 3, wherein the fuzzy system with the fuzzy rules is optimized by an ANFIS (Adaptive Neuro-Fuzzy Inference System) optimization method, wherein parameters which define the input association functions for determining the clusters are optimized with the aid of a gradient descent method, and wherein the parameters for determining output association functions of the fuzzy rules are optimized by a method of least squares.

8. Apparatus for identifying a trapping instance in a closing system (1) which is driven by an electric motor (4), comprising:

- a control unit (7) which is designed to receive a plurality of motor variables (U, I, n) which indicate the state of the electric motor (4) at a specific time in order to determine a trapping force by applying fuzzy rules in a fuzzy process to the plurality of motor variables (U, I, n), and in order to identify the trapping instance as a function of the trapping force, wherein the trapping force is determined by applying the fuzzy rules in the fuzzy process as a function of gradients of the motor variables ($\Delta I$, An).

9. Electric closing system (1) comprising:

- an electric motor (4) for driving a closing part (2), the movement of the said closing part closing the closing system (1);
- a sensor (9) for detecting a plurality of motor variables (U, I, n) which indicate the state of the electric motor (4) at a specific time;
- an apparatus according to Claim 8,

10. Computer program which, when it is run on a data processing unit, executes a method according to one of Claims 1 to 7.

**Revendications**

1. Procédé de détection d'un cas de blocage dans un système de fermeture (1) entraîné par un moteur électrique (4), le procédé comportant les étapes suivantes :

prévoir plusieurs grandeurs (U, I, n) de moteur qui indiquent l'état du moteur électrique (4) à un instant donné, déterminer la force de blocage en appliquant des règles de logique floue dans un procédé à logique floue qui recourt aux différentes grandeurs (U, I, n) du moteur et

détecter le cas de blocage en fonction de la force de blocage,

**caractérisé en ce que**

la force de blocage est déterminée en utilisant des règles de logique floue dans le procédé à logique floue en fonction des gradients (ΔI, Δn) des grandeurs du moteur.

2. Procédé selon la revendication 1, dans lequel le cas de blocage est réalisé en fonction du résultat d'une comparaison des valeurs de seuil de la force de blocage.

3. Procédé selon l'une des revendications 1 et 2, dans lequel les règles de logique floue sont déterminées à l'aide de données d'apprentissage par un procédé de mise en groupe et en particulier par un procédé de mise en groupe par soustraction, les données d'apprentissage associant les différentes grandeurs du moteur à une force de blocage mesurée.

4. Procédé selon la revendication 3, dans lequel les rayons de groupe des règles de logique floue sont sélectionnés de telle sorte qu'une ou plusieurs différences entre la force de blocage déterminée par l'application des règles de logique floue en un point de fonctionnement et une force de blocage correspondante, mesurées au point de fonctionnement, soient minimales.

5. Procédé selon la revendication 3, dans lequel des rayons de groupe des règles de logique floue sont sélectionnés de telle sorte que le nombre des règles de logique floue qui s'établit ne dépasse pas une valeur limite prédéterminée.

6. Procédé selon l'une des revendications 1 à 5, dans lequel la force de blocage est déterminée à l'aide de grandeurs de paramètres et des grandeurs (U, I, n) du moteur, les grandeurs des paramètres étant déterminées en appliquant des jeux de données d'apprentissage aux règles de logique floue et en établissant un système d'équations linéaires sur-déterminé dans lequel une équation linéaire des grandeurs de paramètres est formée pour les règles de logique floue satisfaites sur les jeux de données d'apprentissage qui vérifient les règles de logique floue correspondantes, les grandeurs des paramètres étant déterminées pour chaque règle de logique floue par résolution du système d'équations linéaires sur-déterminé à l'aide d'un procédé à moindre carré des erreurs.

7. Procédé selon la revendication 3, dans lequel le système de logique floue qui présente les règles de logique floue est optimisé par un procédé d'optimisation ANFIS dans lequel des paramètres qui définissent des fonctions d'appartenance d'entrée destinées à déterminer les groupes sont optimisés à l'aide d'un procédé de diminution de gradient, les paramètres servant à déterminer les fonctions d'appartenance d'entrée des règles de logique floue étant optimisés par un procédé aux moindres carrés.

8. Dispositif de détection d'un cas de blocage dans un système de fermeture (1) entraîné par un moteur électrique (4), le dispositif comprenant :

une unité de commande (7) configurée pour recevoir plusieurs grandeurs (U, I, n) du moteur qui indiquent l'état du moteur électrique (4) à un instant donné pour déterminer une force de blocage par application de règles de logique floue dans un procédé à logique floue appliqué sur les différentes grandeurs (U, I, n) du moteur et pour détecter le cas de blocage en fonction de la force de blocage, la force de blocage étant déterminée par application des règles de logique floue dans un procédé à logique floue en fonction des gradients (ΔI, Δn) des grandeurs du moteur.

9. Système électrique de fermeture (1) comportant :

un moteur électrique (4) qui entraîne une partie de fermeture (2) dont le déplacement a pour effet la fermeture du système de fermeture (1),
un détecteur (9) qui détecte plusieurs grandeurs (U, I, n) du moteur qui indiquent l'état du moteur électrique (4) à un instant donné et
un dispositif selon la revendication 8.

10. Programme informatique qui exécute un procédé selon l'une des revendications 1 à 7 lorsqu'il est exécuté sur une unité de traitement de données.

**Fig. 1**

**Fig. 2**

Fig. 3

**Fig. 4**

**Durchschnittliche Kraftdifferenz**

| | Anzahl Cluster | Federsteifigkeit | | | |
|---|---|---|---|---|---|
| | | 5 N/mm | 10 N/mm | 20 N/mm | 65 N/mm |
| 0.2 | 28 | 10.58 | 7.88 | 7.35 | 10.83 |
| 0.25 | 13 | 10.53 | 7.73 | 7.18 | 10.21 |
| 0.3 | 12 | 10.68 | 7.83 | 6.62 | 9.59 |
| 0.35 | 11 | 10.23 | 7.54 | 6.79 | 10.01 |
| 0.4 | 10 | 12.14 | 7.12 | 7.14 | 10.35 |
| 0.45 | 8 | 13.11 | 5.59 | 7.62 | 14.63 |
| 0.5 | 7 | 13.47 | 6.17 | 9.98 | 16.85 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006002525 U1
- EP 0692856 A

- DE 202005019187 U1

**In der Beschreibung aufgeführte Nicht-Patentliteratur**

- **JANG, J.-S. R.** Adaptive Network-based Fuzzy Inference System. *Transactions on Systems, Man and Cybernetics,* Mai 1993, vol. 23 (3